(19) Europäisches Patentamt / European Patent Office / Office européen des brevets

(11) **EP 2 352 309 B1**

(12) **EUROPEAN PATENT SPECIFICATION**

(45) Date of publication and mention
of the grant of the patent:
**23.03.2016 Bulletin 2016/12**

(51) Int Cl.:
*H04R 1/40* *(2006.01)*     *G01S 3/808* *(2006.01)*
*G01S 3/80* *(2006.01)*     *G01H 3/00* *(2006.01)*
*G01H 3/10* *(2006.01)*     *H04R 3/00* *(2006.01)*
*H04R 29/00* *(2006.01)*     *H04R 19/00* *(2006.01)*

(21) Application number: **10194136.7**

(22) Date of filing: **08.12.2010**

(54) **Sound Source Tracking Device**

Tonquellenverfolgungsvorrichtung

Dispositif de suivi de source sonore

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.12.2009 JP 2009280115**

(43) Date of publication of application:
**03.08.2011 Bulletin 2011/31**

(73) Proprietor: **Funai Electric Co., Ltd.
Daito-shi
Osaka 574-0013 (JP)**

(72) Inventors:
• **Horibe, Ryusuke
  Daito-shi Osaka 574-0013 (JP)**
• **Umeda, Shuji
  Daito-shi Osaka 574-0013 (JP)**
• **Tanaka, Fuminori
  Daito-shi Osaka 574-0013 (JP)**
• **Inoda, Takeshi
  Daito-shi Osaka 574-0013 (JP)**
• **Okuno, Hiroshi
  Daito-shi Osaka 574-0013 (JP)**
• **Takahashi, Toru
  Daito-shi Osaka 574-0013 (JP)**

(74) Representative: **Grünecker Patent- und
Rechtsanwälte
PartG mbB
Leopoldstraße 4
80802 München (DE)**

(56) References cited:
EP-A1- 1 513 345          EP-A2- 2 007 167
WO-A1-2005/045376         JP-A- 1 113 623
US-A- 3 348 195           US-A1- 2007 017 292

## Description

### BACKGROUND OF THE INVENTION

1. Field of the Invention

The present invention relates to a sound source tracking device for use in identifying the location of a sound source (localization), and relates in particular to a sound source tracking device that employs a microphone array.

2. Description of Related Art

In mechanical devices such as engines, a site of abnormal operation will sometimes emit noise. Therefore, in instances where noise is being emitted in a mechanical device, by identifying the source thereof it may be possible to identify the site of abnormal operation, and to repair the mechanical device. While the source of occurrence of such noise (sound source) may sometimes be identified simply by the human ear, there are instances in which it is difficult to correctly identify the location of a sound source relying solely on the human ear. Therefore, devices designed to perform localization have been developed.

One method commonly employed in the past for estimating the direction of a sound source is the MUSIC (multiple signal classification) method. The MUSIC method is one that involves eigenvalue decomposition of a correlation matrix to calculate a signal subspace and a noise subspace, then calculating the inverse of the inner product of the noise subspace and an arbitrary sound source location vector, and thereby determine the location and direction of arrival of sound from the sound source.

For example, Patent Document 1 discloses a device that utilizes the MUSIC method to detect the direction of arrival of sound. The device disclosed in Patent Document 1 features a microphone array composed of a plurality of omnidirectional microphones arranged in at least two directions, and is designed to extract the voice components of the microphones, and perform cross correlation operations to detect the direction of arrival of sound.

[Patent Document 1] Japanese Laid-Open Patent Application 2007-6253

WO 2005/045371 A1 discloses a method of determining the sound pressure resulting from a surface element of a sound emitting surface.

US 3348195 A discloses a device for indicating motional direction of a radiator in space.

JP 1113623 A discloses a noise measuring apparatus.

EP 1513345 A1 discloses a communication apparatus and conference apparatus.

### SUMMARY OF THE INVENTION

However, a problem with localization methods that use the MUSIC method is that when too many microphones make up the microphone arrays, the amount of computation processes becomes enormous, necessitating large-scale signal processing circuitry. On the other hand, if there are too few microphones the sound source cannot be identified correctly, and therefore the number of microphones must be fairly substantial. This problem is a serious one.

In conventional localization methods using the MUSIC method, as taught in Patent Document 1, omnidirectional microphones are used, and a resultant problem is that in situations where it is necessary to carry out localization at a site where there is a high level of background noise, it is easy to incorrectly detect the location of the sound source, due to the effects of background noise.

With the foregoing in view, it is an object of the present invention to provide a sound source tracking device that is not susceptible to the effects of background noise, and that is able to carry out localization with high accuracy, without the need to perform complicated signal processing.

The invention provides a sound source tracking device according to claim 1. Further advantageous embodiments are mentioned in the dependent claims.

In the present invention (the present specification), disposition in an array refers broadly to a condition in which a plurality of members are lined up within a given plane; an example of a preferred mode is a state in which the plurality of members are disposed with a certain periodicity in directions within the plane (for example, where disposed in a lattice pattern, honeycomb pattern, or the like).

According to this configuration, the microphone array (which indicates the configuration of disposing the microphones in an array) is composed of differential microphones having bidirectionality. When the differential microphones are positioned in proximity to a sound source targeted for scanning, the effects of background noise (disturbance) may be suppressed, and the target noise may be picked up with good sensitivity. Moreover, because the differential microphones are bidirectional, it is possible to identify with high resolution the location of the sound source that is targeted for scanning. Therefore, through the use of the sound source tracking device having the present configuration, localization can be carried out with high accuracy on the basis of information from the differential microphones, without having to perform cross correlation operations such as those in the MUSIC method.

In the sound source tracking device having the aforementioned configuration, it is preferable that the support member is composed of a plurality of rod-like portions arrayed in a regular pattern, and has a plurality of openings formed therein. With this configuration, even if the microphone array is positioned close to the sound source, an acoustic field may be obtained in a state substantially free of disturbance, and highly accurate localization is easily accomplished.

In preferred practice the sound source tracking device having the aforementioned configuration is further provided with a calculating portion for performing a calculation process on a signal output from each of the plurality of differential microphones, and a display portion that, on the basis of calculation results in the calculating portion, produces a display of the output level of signals outputted by each of the plurality of differential microphones.

According to this configuration, a sound source can be scanned while checking the spatial distribution of acoustic pressure indicated by the display portion. Because the display on the display portion affords visual confirmation of the output level (power) of signals output by the differential microphones, the sound source tracking device is capable of highly accurate localization using simple signal processing circuitry.

In this configuration, the display portion may be adapted to provide visual confirmation of estimated signal output level on the basis of calculation results in the calculating portion, for at least one location situated between neighboring differential microphones. This configuration provides more visual information relating to the spatial distribution of acoustic pressure, making localization easier.

In the sound source tracking device having the aforementioned configuration, the display portion may include a plurality of light emitting portions, and the plurality of light emitting portions may be attached to the support member such that the light emitting portions are disposed in proximity to each of the plurality of differential microphones. Alternatively, the display portion may include a plurality of light emitting portions, and the plurality of light emitting portions may be attached to the support member such that the light emitting portions are situated both in proximity to each of the plurality of differential microphones, and in proximity to at least one location situated between the differential microphones.

According to this configuration, the user can visually confirm the spatial distribution of acoustic pressure while continuing to look towards the microphone array, thereby making it easy to scan a sound source. The display portion may be provided simply by light emitting diodes, a driver circuit therefor, or the like, and is therefore less expensive than with the case where a monitor is provided as the display portion.

In the configuration of providing the sound source tracking device with light emitting portions, the light emitting portions may vary the amount of light emitted by the light emitting portions according to the signal output level; or vary the color of light emitted according to the signal output level.

In a sound source tracking device with the above configuration, the calculating portion may be attached to the support member. In the sound source tracking device with this configuration, there is no need to perform cross correlation operations of the signals output from the differential microphones, and the signal processing circuitry may be simple. It is therefore possible, for example, to provide a single signal processing circuit for each differential microphone, and to dispose the calculating portion on the support member to which the differential microphones are attached.

In the sound source tracking device with the above configuration, a grip portion may be provided to the support member. In this case, the calculating portion may be incorporated into the grip portion. This configuration makes it easy to move the microphone array, making it easy to handle.

In the sound source tracking device with the above configuration, it is preferable for the plurality of differential microphones to be arranged such that neighboring differential microphones are spaced equidistantly. According to this configuration, it is possible to ascertain an unbiased spatial distribution of acoustic pressure using the microphone array.

According to the sound source tracking device of the present invention, because a microphone array that employs differential microphones is used, localization may be carried out highly accurately and unaffected by background noise. Moreover, according to the sound source tracking device of the present invention, because localization is carried out on the basis of the output level of signals output by the microphones, there is no need for complicated signal processing as is the case where the MUSIC method is used, and localization may be accomplished with a simple circuit configuration.

**BRIEF DESCRIPTION OF THE DRAWINGS**

Fig. 1 is a schematic plan view depicting a configuration of a sound source tracking device according to the embodiment;
Fig. 2 is a schematic side view depicting a configuration of a sound source tracking device according to the embodiment;
Fig. 3 is a schematic sectional view depicting a configuration of a differential microphone provided to the sound source tracking device according to the embodiment;
Fig. 4 is a graph showing the relationship of acoustic pressure P and distance R from a sound source;
Fig. 5 is a graph illustrating differences between characteristics of an ordinary microphone and characteristics of a differential microphone;
Fig. 6 is a model diagram showing directional characteristics of a differential microphone of the embodiment;
Fig. 7 is a block diagram showing a configuration of the sound source tracking device according to the embodiment;

Fig. 8 is a graph illustrating drive control of a light emitting portion in the sound source tracking device according to the embodiment;

Fig. 9 is a drawing illustrating operation of the sound source tracking device according to the embodiment;

Fig. 10 is a drawing showing a modified example of the sound source tracking device according to the embodiment;

Fig. 11 is a drawing showing another modified example of the sound source tracking device according to the embodiment;

Fig. 12A is a sectional view showing another mode of differential microphone which does not form part of the present invention;

Fig. 12B is a drawing illustrating a configuration in an instance where the support member is furnished with differential microphones of another mode which does not form part of the present invention; and

Fig. 13 is a drawing showing another modified example of the sound source tracking device according to the embodiment.

## DETAILED DESCRIPTION OF PREFERRED EMBODIMENTS

The following detailed description of the embodiments of the sound source tracking device according to the present invention makes reference to the accompanying drawings.

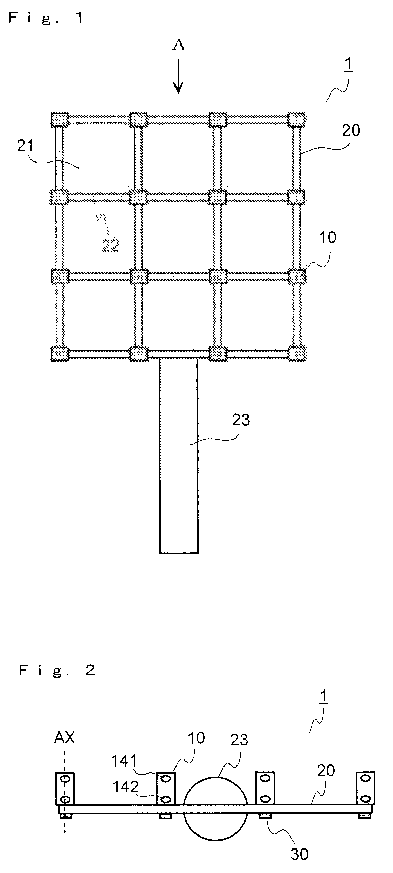

Fig. 1 is a schematic plan view depicting a configuration of a sound source tracking device according to the embodiment. Fig. 2 is a schematic side view depicting a configuration of a sound source tracking device according to the embodiment, and is taken along arrow A in Fig. 1. As shown in Figs. 1 and 2, the sound source tracking device 1 of the present embodiment includes a plurality of differential microphones 10, a support member 20 for supporting the plurality of differential microphones 10, and a plurality of light emitting portions 30 disposed in individual proximity to the plurality of differential microphones 10.

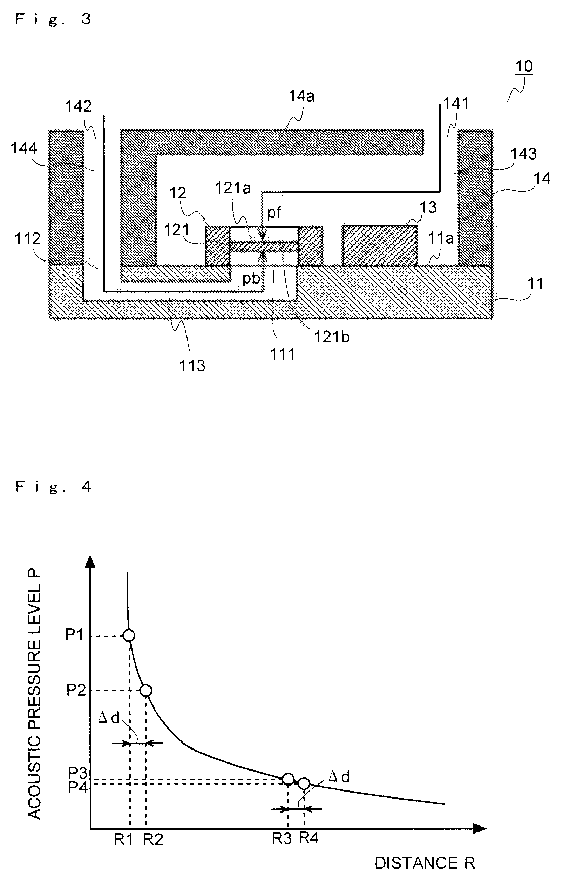

Fig. 3 is a schematic sectional view depicting a configuration of a differential microphone provided to the sound source tracking device according to the embodiment. The differential microphone 10 includes a microphone substrate 11 having an onboard MEMS (micro electrical mechanical system) chip 12 and an ASIC (application specific integrated circuit) 13, and covered by a cover body 14.

The MEMS chip 12 is a microphone chip of capacitor type manufactured using semiconductor manufacturing technology; it has a diaphragm 121 adapted to undergo displacement by acoustic pressure, and has the function of converting an acoustic signal to an electrical signal. The MEMS chip 12 is configured to be able to input sound to either side 121a, 121b of the diaphragm 121. The ASIC 13 is an integrated circuit for amplification processing of the electrical signal output from the MEMS chip 12.

The substrate surface 11 a of the microphone substrate 11 is provided with a first opening 111 and a second opening 112. The first opening 111 and the second opening 112 communicate via a substrate internal space 113. The MEME chip 12 is arranged with the diaphragm 121 oriented approximately parallel to the microphone substrate 11, and so as to close off the first opening 111 from the substrate surface 11a side.

The cover body 14 has a first sound entry port 141 and a second sound entry port 142 formed in the upper face 14a thereof. A first space 143 communicating with the first sound entry port 141 and a second space 144 isolated from the first space 143 and communicating with the second sound entry port 142 are formed in the cover body 14. This cover body 14 is mounted on the microphone substrate 11 in such a way that the first space 143 is partitioned off from the substrate internal space 113 by the MEMS chip 12. Also, the cover body 14 is mounted on the microphone substrate 11 in such a way that the second space 144 communicates with the substrate internal space 113 via the second opening 112.

The differential microphone 10 with the above configuration is provided with a sound path for guiding outside sound in turn through the first sound entry port 141 and the first space 143 and then towards the upper face 121 a of the diaphragm 121, and with a sound path for guiding outside sound in turn through the second sound entry port 142, the second space 144, the second opening 112, the substrate internal space 113, and the first opening 111, and then towards the lower face 121 b of the diaphragm 121. The differential microphone 10 is configured to convert an acoustic signal to an electrical signal through oscillation of the diaphragm 121 caused by a differential between acoustic pressure pf bearing on the upper face 121a of the diaphragm 121 and acoustic pressure pb bearing on the lower face 121b of the diaphragm 121.

The description now turns to the characteristics of the differential microphone 10 having the above configuration. But before embarking on a description of the characteristics of the differential microphone 10, the nature of acoustic waves is discussed. Fig. 4 is a graph showing the relationship of acoustic pressure P and distance R from a sound source. As shown in Fig. 4, an acoustic wave experiences attenuation as it advances through a medium such as air, and the acoustic pressure (intensity/amplitude of the acoustic wave) declines. Acoustic pressure is inversely proportional to distance from the sound source, and the relationship of acoustic pressure P and distance R is expressed by Equation (1) below. In Equation (1), k is a proportional constant.

$$P = k/R \quad (1)$$

As may be understood from Fig. 4 and Equation (1), rapid attenuation of acoustic pressure is observed at locations close to the sound source (the left side in the graph), and attenuation becomes more gradual further away from the sound source (the right side in the graph). Specifically, acoustic pressure transmitted at two locations whose distances from the sound source differ by Δd (R1 and R2, and R3 and R4) experiences large attenuation (P1 - P2) between R1 to R2 which are situated a short distance from the sound source, whereas there is no appreciable attenuation (P3 - P4) between R3 to R4 which are situated a greater distance from the sound source.

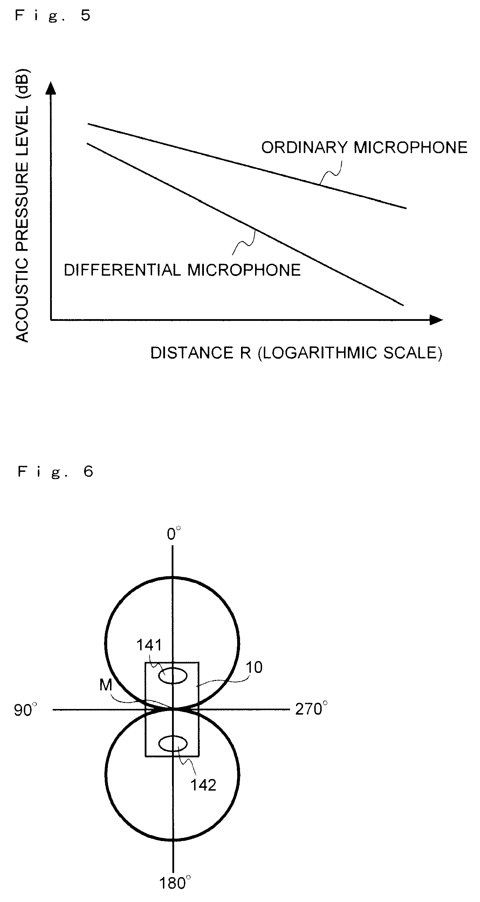

Fig. 5 is a graph illustrating differences between characteristics of an ordinary microphone and characteristics of a differential microphone. Here, an ordinary microphone refers to a microphone configured such that acoustic pressure is applied to only one face of the diaphragm (an omnidirectional microphone). In Fig. 5, the horizontal axis gives distance R from the sound source converted to a logarithmic scale; and the vertical axis gives acoustic pressure level applied to the microphone diaphragm. Herein, the microphone characteristics shown in Fig. 5 are sometimes expressed as first order gradient characteristics.

In the differential microphone 10, acoustic pressure pf is applied to the upper face 121a of the diaphragm 121, and acoustic pressure pb is applied to the lower face 121b of the diaphragm 121 (see Fig. 3). As a result, the acoustic pressure applied to the diaphragm 121 is equal to pf - pb. Therefore, as shown in Fig. 5, the acoustic pressure level applied to the diaphragm 121 of the differential microphone 10 is lower than the acoustic pressure level applied to the diaphragm of the ordinary microphone, and the decline in the acoustic pressure with respect to distance from the sound source is more steep.

Fig. 6 is a model diagram showing directional characteristics of a differential microphone of the embodiment. In Fig. 6, the differential microphone 10 is shown with the direction connecting the center of the first sound entry port 141 and the center of the second sound entry port 142 aligned with the 0° -180° direction. In Fig. 6, the midpoint between the center of the first sound entry port 141 and the center of the second sound entry port 142 is denoted by M.

As shown in Fig. 6, in the differential microphone 10, for a given distance between the sound source and the differential microphone 10 (the midpoint M), the acoustic pressure (pf - pb) applied to the diaphragm 121 (see Fig. 3) reaches a maximum when the direction of the sound source is 0° or 180°. This is because the differential between the distance for an acoustic wave to travel from the first sound entry port 141 to the upper face 121a of the diaphragm 121 and the distance for an acoustic wave to travel from the second sound entry port 142 to the lower face 121 b of the diaphragm 121 is greatest in these directions.

On the other hand, when the direction of the sound source is 90° or 270°, the acoustic pressure (pf - pb) applied to the diaphragm 121 reaches the minimum (0). This is because the differential between the distance for an acoustic wave to travel from the first sound entry port 141 to the upper face 121a of the diaphragm 121 and the distance for an acoustic wave to travel from the second sound entry port 142 to the lower face 121b of the diaphragm 121 is essentially 0.

Specifically, the differential microphone 10 has a quality (bidirectionality) such that it readily picks up sound incident from the 0° and 180° directions, but does not readily pick up sound incident from the 90° and 270° directions. In the differential microphone 10, the axis lying in the 0° -180° direction is the principal axis of directionality.

The differential microphone 10 also excels in ability to pick up a target sound occurring in proximity to the differential microphone 10 while eliminating background noise (i.e. sounds other than the target sound). Acoustic pressure of the target sound occurring in proximity to the differential microphone 10 experiences considerable attenuation between the upper face 121a and the lower face 121b of the diaphragm 121, and there is a large differential between the acoustic pressure pf transmitted to the upper face 121a of the diaphragm 121 and the acoustic pressure pb transmitted to the lower face 121b of the diaphragm 121. On the other hand, because background noise originates at locations further away than the target sound, substantially no attenuation occurs between the upper face 121a and the lower face 121b of the diaphragm 121, and there is an extremely small differential between the acoustic pressure pf transmitted to the upper face 121a of the diaphragm 121 and the acoustic pressure pb transmitted to the lower face 121b of the diaphragm 121. This presumes that the distance from the sound source to the first sound entry port 141 and the distance from the sound source to the second sound entry port 42 are different.

Because the differential of acoustic pressure pf, pb of background noise picked up by the diaphragm 121 is extremely small, the acoustic pressure of the background noise is substantially canceled out by the diaphragm 121. In contrast, because the differential of acoustic pressure pf, pb of the target noise picked up by the diaphragm 121 is large, the acoustic pressure of the target noise is not canceled out by the diaphragm 121. Therefore, in the differential microphone 10, the signal obtained through oscillation of the diaphragm 121 appears as signal of the target noise with background noise eliminated. That is, the differential microphone 10 excels in the ability to pick up a target sound occurring in proximity thereto, while eliminating background noise.

Returning now to Figs. 1 and 2, the configuration of the sound source tracking device 1 of the present embodiment are described. The support member 20 on which the plurality of differential microphones 10 are arranged is a plate shape member with a profile that is generally square in shape in plan view. A plurality of openings 21 (there are nine in the present embodiment) that are generally square in shape in plan view are formed in a regular pattern in the horizontal and vertical directions in the support member 20. Therefore, the support member 20 has a lattice structure of rod-like portions 22 arrayed in a regular pattern in the horizontal and vertical directions.

In preferred practice, the surface area of the openings 21 in the support member 20 are as large as possible (in other words, the rod-like portions 22 of the support member 20 are as thin as possible). This is to prevent, to the fullest extent possible, disturbance of the acoustic field when the support member 20 with the plurality of differential microphones 10 arranged thereon (the microphone array) is brought closer to the sound source.

Each of the plurality of differential microphones 10 (there are 16 in the present embodiment) is situated substantially on a lattice point of the support member 20 having a lattice structure. In other words, the support member 20 supports the plurality of differential microphones 10 such that the plurality of differential microphones 10 are arrayed in a lattice arrangement (which is one mode of disposition in an array) within a given plane.

In the present embodiment, the support member 20 supports the differential microphones 10 such that distances between neighboring differential microphones 10 are approximately equal. The plurality of differential microphones 10 are arranged on the support member 20 such that their individual sound entry ports 141, 142 have the same orientation, in the present embodiment, the sound entry ports 141, 142 of the differential microphones 10 face upward in Fig. 1 (frontward in Fig. 2).

Provided that the orientation of the sound entry ports 141, 142 lies in the same direction for all of the differential microphones 10, no particular limit is imposed as to the direction. For example, the orientation may be adjusted to make it more difficult for noise (e.g. reflected sound from the support member 20) to enter the differential microphones 10.

The plurality of differential microphones 10 are individually supported on the support member 20 such that their principal axis of directionality AX (the direction in which the two sound entry ports 141, 142 line up, corresponding to the 0° -180° direction in Fig. 6) is generally orthogonal to the given plane in which they are arrayed. In Fig. 1, the principal axis of directionality AX of the differential microphones 10 is approximately parallel to the direction orthogonal to the plane of the page. In Fig. 2, the axis of directionality AX of the differential microphones 10 is approximately parallel to the vertical direction.

Where the differential microphones 10 have been arranged with the axis of directionality AX inclined from the direction approximately orthogonal to the given plane, and where this incline is too great, the differential microphones 10 will exhibit best sensitivity in a biased direction, and tracking the sound source will be difficult. Or, where the axis of directionality AX has been arranged parallel to the given plane and a sound source is situated directly above the differential microphones for example, the power of the signals output by the differential microphones 10 will be extremely low, and in this case as well tracking the sound source will be difficult. Therefore, it is preferable to individually arrange the plurality of differential microphones 10 with their axis of directionality AX aligned as closely as possible to the orthogonal, with respect to the given plane in which they are arrayed.

A grip portion 23 having a generally cylindrical profile is disposed at one site on the exterior side wall of the support member 20. With this grip portion 23, the user may easily track a sound source while holding in the hand the support member 20 with the plurality of differential microphones 10 arranged thereon (the microphone array).

As shown in Fig. 2, in the sound source tracking device 1 of the present embodiment, the plurality of light emitting portions 30 are arranged on the support member 20 to the back face side from the face thereof where the differential microphones 10 are arranged. Each of the plurality of light emitting portions 30 is disposed at a location approximately opposite each of the plurality of differential microphones 10 (this corresponds to the element of being in proximity to the differential microphones taught in the present invention). Therefore, the plurality of light emitting portions 30 are likewise arranged generally at the lattice points of the support member 20, and feature arrangement in a lattice pattern.

The reason for disposing the light emitting portions 30 to the back face side on the of the support member 20 from the face where the differential microphones 10 are arranged is to make it easier for the user to see the light emitting portions 30 when the differential microphones 10 are pointed towards the sound source during sound source tracking. The locations of the light emitting portions 30 may be any ones that are easy for the user to see, such as being disposed in row with the differential microphones 10 for example.

Each of the plurality of light emitting portions 30 provided to the sound source tracking device 1 is composed of a set of a red LED (light emitting diode) and a green LED. The reason that the light emitting portions 30 feature LEDs of two different colors is to facilitate visual confirmation of whether any given differential microphone 10 is close to a sound source. The method for lighting the light emitting portions 30 is discussed in detail later.

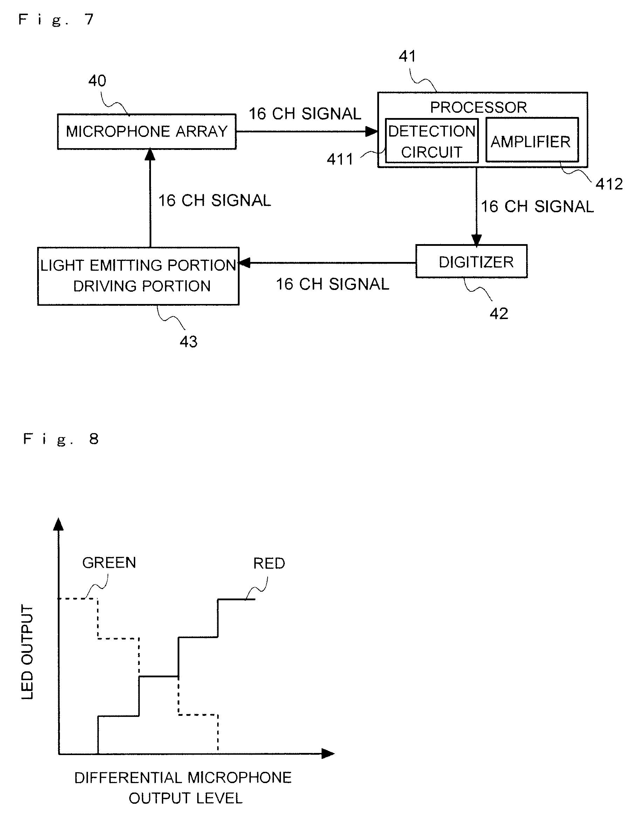

Fig. 7 is a block diagram showing a configuration of the sound source tracking device according to the present embodiment. As shown in Fig. 7, in addition to a microphone array 40 composed of the plurality of differential microphones 10 supported on the support member 20, the sound source tracking device 1 is provided with a processor 41, a digitizer 42, and a light emitting portion driving portion 43. In the present embodiment, the processor 41, a digitizer 42, and a light emitting portion driving portion 43 take the form of an IC chip housed inside the grip portion 23.

The differential microphones 10, the processor 41, the digitizer 42, and the light emitting portion driving portion 43 are supplied with power by a power supply, not shown. The power supply may be obtained from a battery housed inside the grip portion 23 of the sound source tracking device 1, or from an AC outlet via a power cord for example. The support member 20 is additionally provided with wiring for delivering the power supply to the differential microphones 10, and with wiring for delivering output signals from the differential microphones 10 to the processor 41. The support member 20 is further provided with wiring that electrically connects the light emitting portions 30 and the light emitting portion driving portion 43.

The processor 41 carries out processing of signals (16-channel signal) output from the differential microphones 10. The processor 41 includes a detection circuit 411 for detecting peaks of signals output from the differential microphones 10 and obtaining an envelope signal, and an amplifier 412 for amplifying the envelope signal output by the detection circuit 411.

The digitizer 41 carries out digitization of the envelope signal (16-channel signal) corresponding to the differential microphones 10 and output by the processor 41.

The light emitting portion driving portion 43 drives the individual light emitting portions 30 according to the signal level of the digital signal corresponding to each of the differential microphones 10 (which changes in response to the output level (power) of the signal output by each differential microphone 10) that is output by the digitizer 42. Specifically, the light emitting portions 30 emit light according to the output level (power) of the signal output by each differential microphone 10.

Fig. 8 is a graph illustrating drive control of a light emitting portion in the sound source tracking device according to the embodiment. In Fig. 8, the horizontal axis indicates output level (power) of a signal output by a differential microphone 10, and the vertical axis indicates LED output. As mentioned above, the light emitting portion 30 is furnished with a red LED and a green LED. The red LED and the green LED each switch their output among five stages according to the output level of the signal output by the differential microphone 10. However, the red LED has higher output in association with increasing output level of the signal output by the differential microphone 10, whereas the green LED has lower output in association with increasing output level of the signal output by the differential microphone 10.

Specifically, when the signal output by the differential microphone 10 has a low output level, the color of light emitted by the light emitting portion 30 is green, and as the output level increases, changes to an orange color produced by mixing of green and red. As the output level of the signal output by the differential microphone 10 increases further, the color of light emitted by the light emitting portion 30 becomes red.

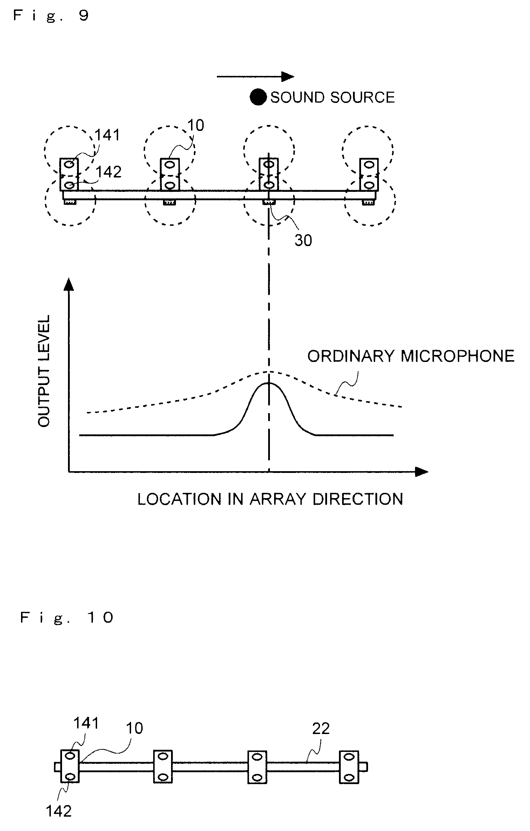

Next, operation of the sound source tracking device 1 having the above configuration is described. Fig. 9 is a drawing illustrating operation of the sound source tracking device according to the embodiment. As shown in Fig. 9, a sound source is situated directly above a given differential microphone row in the sound source tracking device 1, and the sound source is swept from left to right (the direction of the arrow in Fig. 9). In this instance, the differential microphone 10 situated third from the left (second from the right) exhibits an output change like that depicted by the solid line in Fig. 9 (see the graph at bottom in Fig. 9).

In the graph shown at bottom in Fig. 9, the horizontal axis indicates location in the microphone array direction, and the vertical axis indicates the output level (power) of the signal output by the microphone. The broken line in the graph shown at bottom in Fig. 9 is a graph showing output change of an ordinary microphone (an omnidirectional microphone configured such that acoustic pressure is applied to only one face of the diaphragm) situated at a location comparable to that of the aforementioned differential microphone 10.

Owing to the first order gradient characteristics (see Fig. 5) of the differential microphones 10 provided to the sound source tracking device 1, the output thereof is extremely low when positioned a considerable distance away from the sound source. Therefore, as shown in Fig. 9, when a differential microphone 10 is at a location far away from the sound source, the output level is low, to the point of being substantially flat. On the other hand, when the differential microphone 10 is moved closer to the sound source, the output level increases sharply.

The differential microphones 10 have bidirectional characteristics (indicated by the broken line circles in Fig. 9). Therefore, as shown in Fig. 9, when the sound source is situated directly above a differential microphone 10, the output level is high, whereas when it moves away from directly overhead, the output level readily drops.

In this way, each of the differential microphones 10 of the sound source tracking device 1 produces a high output level signal only when a sound source is close by, and experiences a rapid drop in signal output level when the sound source moves out of proximity. Consequently, sound source tracking using the sound source tracking device 1 affords the following operation. With an ordinary microphone, even at a location far away from the sound source the output level is higher than with a differential microphone 10, and the change in output level is gradual.

When tracking a sound source, the user, relying on his or her own hearing acuity, positions the microphone array 40 (the support member 20 having disposed thereon an array of a plurality of differential microphone 10) towards the direction of the sound source being tracked. In this instance, of the differential microphones 10 that make up the microphone array 40, the differential microphones 10 situated away from the target sound source have low signal output levels. Therefore, the color emitted by the light emitting portions 30 situated on the opposite side of the support member 20 from the corresponding differential microphones 10 turns to green.

On the other hand, as the locations of the differential microphones 10 move closer to the target sound source, the output level of signals output by the differential microphones 10 rises, and the color emitted by the corresponding light emitting portions 30 changes. The light emitting portions 30 corresponding to differential microphones 10 in immediate proximity to the sound source turn to red. In the sound source tracking device 1, owing to the characteristics of the differential microphones 10, the color emitted by the light emitting portions 30 changes with good contrast according to the distance from the sound source. Therefore, localization may be carried out with high resolution.

When the user, simply relying on his or her own hearing acuity, has positioned the microphone array 40 at a location assumed to lie in the sound source direction of the target sound source, in some instances all of the differential microphones 10 may be situated so far away from the target sound source that no portion of the light emitting portions 30 indicates red. In such instances, localization may be carried out by moving the array microphone 40 while relying on those light emitting portions 30 that emit color indicating a higher output level of the signal output by a differential microphone 10, from among the plurality of light emitting portions 30.

For example, in an instance in which one wishes to track down the source of a noise that occurs at engine startup (presumed to be a site of abnormal operation), the background noise will be considerable. However, as discussed above, the differential microphones 10 provided to the sound source tracking device 1 of the present embodiment excel in ability to pick up target sound occurring close by, while eliminating background noise. Therefore, accurate localization of the sound source targeted for tracking is possible even in the presence of a high level of background noise.

In preferred practice, the spacing between the sound entry ports 141, 142 of the differential microphones 10 is set to 10 mm or less. It is possible thereby to effectively suppress 10kHz or less distant noise (background noise).

The sound source tracking device 1 of the present embodiment has a configuration wherein a sound source is localized on the basis of the output level (power) of signals output by the differential microphones 10. Therefore, there is no need to perform cross correlation operations of the signals output from the differential microphones as in the MUSIC method, and a simple configuration may be adopted for the signal processing circuit.

The sound source tracking device 1 shown hereinabove is but one example of embodiment of the present invention, and the scope of application of the invention is not limited to the embodiment shown above. Specifically, various modifications to the embodiment shown above are possible without departing from the scope of the invention as defined by the appendent claims.

For example, in the embodiment shown above, the number of differential microphones 10 provided to the sound source tracking device 1 was 16, but this number may be changed as a matter of course. The locations of the differential microphones 10 disposed on the support member 20 may be locations that diverge from the lattice points. A configuration in which, for example, the differential microphones 10 are not arranged on the surface of the support member 20, as depicted in Fig. 10, is also acceptable. In Fig. 10, the differential microphones 10 are disposed on the side faces of the rod-like portions 22 of the support member 20.

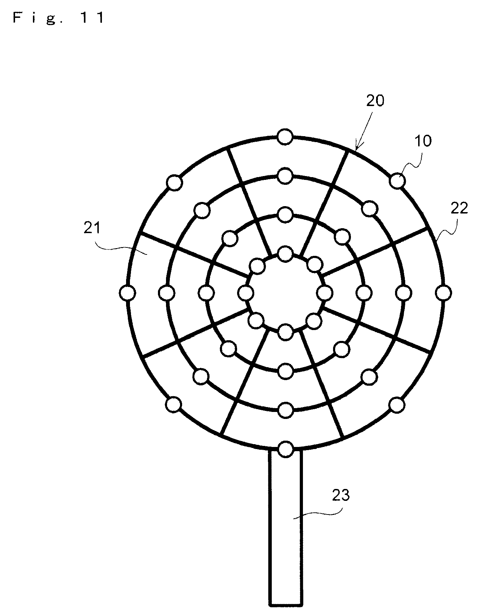

Whereas the embodiment shown above was configured with the differential microphones 10 arrayed in a lattice pattern, this configuration is not intended as limiting. Specifically, provided that that differential microphones 10 are disposed in an array, it is also acceptable for the differential microphones 10 to be arranged in a honeycomb pattern or the like, for example. While it is preferable that, for the arrayed differential microphones 10, equal spacing is provided between neighboring microphones, equal spacing is not mandatory. For example, a configuration wherein the support member 20 is composed of a plurality of concentrically disposed circular frames 22 as depicted in Fig. 11, a configuration wherein the differential microphones 10 are arrayed in a radial pattern (one mode of disposition in an array according to the present invention), or the like would also be acceptable.

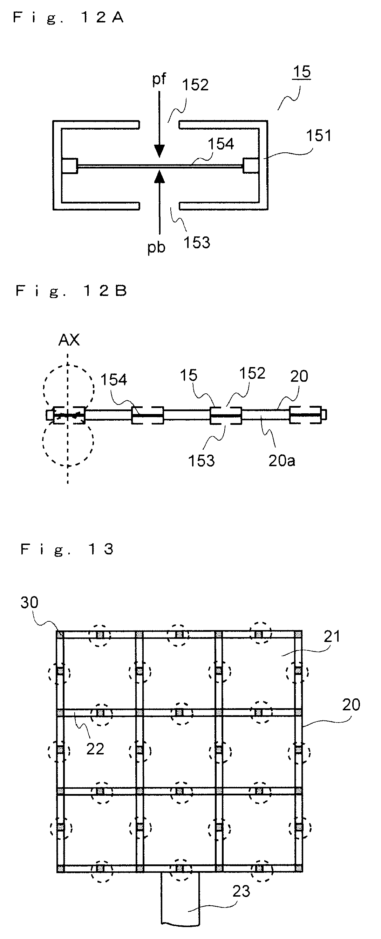

The differential microphones 10 provided to the sound source tracking device 1 are merely one example of differential microphones that may be implemented in the present invention. Specifically, the differential microphones 10 of the embodiment were configured with two sound entry ports 141, 142 formed on the same face, and acoustic pressure is applied to both faces 121a, 121b of the diaphragm 121. The configuration like that shown in Fig. 12A for example does not form part of the present invention.

The differential microphone 15 shown in Fig. 12A has one sound entry port 152, 153 formed respectively in the upper face and lower face of an enclosure 151 (multiple sound entry ports may be provided on the upper face and lower face as well), and acoustic pressure is applied to the upper face and lower face of a diaphragm 154. The differential microphones 15 are oriented with the principal axis of directionality AX coincident with the direction orthogonal to the diaphragm 154 (see Fig. 12B). Therefore, when the principal axes of directionality AX of the differential microphones 15 are positioned approximately orthogonal to the given plane in which the differential microphones 15 are arrayed, the diaphragms 154 are oriented approximately parallel to the surface 20a of the support member 20 as depicted in Fig. 12B.

Yet another configuration of the differential microphone is a type having two microphones for example, and adapted to output the differential of signals output from the respective microphones as an acoustic signal.

In the embodiment shown above, the differential microphones 10 are configured as MEMS microphones formed using semiconductor manufacturing technology, but no limitation is imposed thereby, and capacitor microphones that use an electret film (ECM) or the like could also be used. Nor are the differential microphones limited to microphones of so-called capacitor type; for example, dynamic type, magnetic type, or piezoelectric type microphones could also be used.

In the embodiment shown above, the configuration was one in which the light emitting portions 30 are provided with LEDs of two colors, and the emitted color changes according to the output level (power) of the signal output by the differential microphone 10. However, this configuration is not intended as limiting, and the light emitting portions 30 may instead be configured as single-color LEDs, for a configuration in which the amount of emitted light varies according to the output level of the signal output by the differential microphone 10. Such a configuration likewise allows localization to be carried out through visual confirmation of differences in output level of signals output by individual differential microphones. Driving of the light emitting portions 30 may be accomplished using analog signals, and a configuration that dispenses with the digitizer 42 (see Fig. 7) used in the embodiment shown above would also be acceptable.

While the embodiment shown above is configured such that the light emitting portions 30 are composed of LEDs, the light emitting portions 30 employing LEDs are but one example of light emitting portions in the present invention, and the light emitting portions may be formed with light sources other than LEDs (such as semiconductor lasers for example).

While the embodiment shown above is configured such that one of the light emitting portions 30 is arranged in proximity to each of the differential microphones 10, this configuration is not intended as limiting. Specifically, as shown in Fig. 13 for example, a configuration in which, in addition to being disposed in proximity to the differential microphones 10, light emitting portions 30 are disposed in proximity to at least one location between differential microphones 10.

Fig. 13 is a schematic plan view of the support member 20 viewed from the face thereof on the opposite side from the face thereof where the differential microphones 10 are disposed. In the configuration depicted in Fig. 13, in addition to the light emitting portions 30 disposed in proximity to the differential microphones 10, light emitting portions 30 are also disposed in proximity to medial locations between neighboring differential microphones 10 along the array axes (portions indicated by broken line circles). The light emitting portions 30 disposed in proximity to medial locations between neighboring differential microphones 10 may be adapted to emit light according to estimated signal output levels obtained through supplemental processing on the basis of the output levels of signals output from the differential microphones.

The embodiment shown above is configured with the display portion composed of the light emitting portions 30 and the light emitting portion driving portion 43. However, the display portion could also be a monitor composed of a liquid crystal display, for example.

Additionally, according to the present invention, processing of signals output by the differential microphones 10 and signal processing for driving the corresponding light emitting portions 30 may be accomplished with a simple configuration. Therefore, an arrangement in which the differential microphones 10 are provided individually with an IC for carrying out signal processing is also acceptable. In this instance the ICs are attached to the support member 20.

The sound source tracking device of the present invention is readily capable of highly accurate localization, and also affords excellent portability during sound source tracking. Therefore, it is suited to use in various fields where localization is necessary.

## Claims

1. A sound source tracking device (1) comprising:

   a plurality of microphones (10)
   a support member (20) for supporting the plurality of microphones (10) such that the plurality of microphones (10) are disposed in an array within a given plane,

   **characterized in that**
   the plurality of microphones (10) are a plurality of bidirectional differential microphones (10), wherein the plurality of differential microphones (10) are configured with two sound ports (141,142) such that acoustic pressure is applied to both faces of a diaphragm (121), wherein the two sound ports (141, 142) are provided on the same plane and wherein the two sound ports (141, 142) line up as a principal axis of directionality (AX); and
   the plurality of differential microphones (10) are supported by the support member (20) such that the principal axis (AX) of directionality of each of the microphones is substantially orthogonal to the given plane and the plane on which the two sound ports (141, 142) of each of the microphones are provided is substantially orthogonal to the given plane.

2. The sound source tracking device (1) according to Claim 1 wherein the support member (20) is composed of a plurality of rod-like portions (22) arrayed in a regular pattern, and has a plurality of openings (21) formed therein.

3. The sound source tracking device (1) according to Claim 1 or 2, further comprising:

   a calculating portion for performing a calculation process on a signal output from each of the plurality of differential microphones (10); and
   a display portion that is adapted to produce, on the basis of calculation results in the calculating portion, a display of the output level of signals outputted by each of the plurality of differential microphones (10).

4. The sound source tracking device (1) according to Claim 3, wherein the display portion is adapted to produce a display of an estimated signal output level obtained on the basis of the calculation results in the calculating portion, for at least one location between neighboring differential microphones (10).

5. The sound source tracking device (1) according to Claim 3 wherein
   the display portion includes a plurality of first light emitting portions (30); and
   the plurality of first light emitting portions (30) are attached to the support member (20) such that the first light emitting portions (30) are disposed in proximity to the plurality of differential microphones (10), respectively.

6. The sound source tracking device (1) according to Claim 4 and 5 wherein the display portion includes a plurality of second light emitting portions; and
   the plurality of second light emitting portions are attached to the support member such that the second light emitting portions (30) are disposed in proximity to at least one location between the differential microphones (10).

7. The sound source tracking device (1) according to Claim 5 or 6 wherein the first light emitting portions (30), or the first and second light emitting portions vary the amount of light emitted according to the signal output level.

8. The sound source tracking device (1) according to Claim 5 or 6 wherein the first light emitting portions (30), or the first and second light emitting portions vary the color of light emitted according to the signal output level.

9. The sound source tracking device (1) according to any of Claims 3 through 8 wherein the calculating portion is attached to the support member (20).

10. The sound source tracking device (1) according to any of Claims 1 through 9 wherein a grip portion (23) is disposed on the support member (20).

11. The sound source tracking device (1) according to Claim 10 the calculating portion is incorporated into the grip portion (23).

12. The sound source tracking device (1) according to any of Claims 1 through 11 wherein the plurality of differential microphones (10) are arranged such that neighboring differential microphones (10) are spaced equidistantly.

13. The sound source tracking device according to claim 1, wherein the differential microphones (10) are disposed in an array with the sound ports (141, 142) pointing substantially in a same direction.

14. The sound source tracking device according to any one of claims 1 through 13, wherein the sound port (141, 142) is a sound entry port.

**Patentansprüche**

1. Schallquellen-Verfolgungsvorrichtung (1), die umfasst:

   eine Vielzahl von Mikrofonen (10),
   ein Trageelement (20), von dem die Vielzahl von Mikrofonen (10) so getragen werden, dass die Vielzahl von Mikrofonen (10) in einer Gruppe innerhalb einer vorgegebenen Ebene angeordnet sind,

   **dadurch gekennzeichnet, dass**
   die Vielzahl von Mikrofonen (10) eine Vielzahl zweiseitig gerichteter Gradienten-Mikrofone (10) sind, wobei die Vielzahl von Gradienten-Mikrofonen (10) mit zwei Schallöffnungen (141, 142) versehen sind, so dass Schalldruck auf beide Flächen einer Membran (121) wirkt, wobei sich die zwei Schallöffnungen (141, 142) in derselben Ebene befinden und die zwei Schallöffnungen (141, 142) als eine Richtwirkungs-Hauptachse (AX) aufgereiht sind; die Vielzahl von Gradienten-Mikrofonen (10) von dem Trageelement (20) so getragen werden, dass die Richtwirkungs-Hauptachse (AX) jedes der Mikrofone im Wesentlichen senkrecht zu der vorgegebenen Ebene ist und die Ebene, in der sich die zwei Schallöffnungen (141, 142) jedes der Mikrofone befinden, im Wesentlichen senkrecht zu der vorgegebenen Ebene ist.

2. Schallquellen-Verfolgungsvorrichtung (1) nach Anspruch 1, wobei das Trageelement (20) aus einer Vielzahl stabartiger Abschnitte (22) besteht, die in einem regelmäßigen Muster angeordnet sind, und eine Vielzahl von Öffnungen (21) darin ausgebildet sind.

3.  Schallquellen-Verfolgungsvorrichtung (1) nach Anspruch 1 oder 2, die des Weiteren umfasst:

    einen Berechnungsabschnitt zum Durchführen eines Berechnungsprozesses an einem Signal, das von jedem der Vielzahl von Gradienten-Mikrofonen (10) ausgegeben wird, und einen Anzeigeabschnitt, der so eingerichtet ist, dass er auf Basis von Berechnungsergebnissen in dem Berechnungsabschnitt eine Anzeige des Ausgangspegels von Signalen erzeugt, die von jedem der Vielzahl von Gradienten-Mikrofonen ausgegeben werden.

4.  Schallquellen-Verfolgungsvorrichtung (1) nach Anspruch 3, wobei der Anzeigeabschnitt so eingerichtet ist, dass er eine Anzeige eines geschätzten Signal-Ausgangspegels, der auf Basis der Berechnungsergebnisse in dem Berechnungsabschnitt ermittelt wird, für wenigstens eine Position zwischen benachbarten Gradienten-Mikrofonen (10) erzeugt.

5.  Schallquellen-Verfolgungsvorrichtung (1) nach Anspruch 3, wobei
    der Anzeigeabschnitt eine Vielzahl erster lichtemittierender Abschnitte (30) enthält; und
    die Vielzahl erster lichtemittierender Abschnitte (30) an dem Trageelement (20) so angebracht sind, dass die ersten lichtemittierenden Abschnitte (30) jeweils in der Nähe der Vielzahl von Gradienten-Mikrofonen (10) angeordnet sind.

6.  Schallquellen-Verfolgungsvorrichtung (1) nach Anspruch 4 oder 5, wobei der Anzeigeabschnitt eine Vielzahl zweiter lichtemittierender Abschnitte enthält; und
    die Vielzahl zweiter lichtemittierender Abschnitte so an dem Trageelement (20) angebracht sind, dass die zweiten lichtemittierenden Abschnitte (30) in der Nähe wenigstens einer Position zwischen den Gradienten-Mikrofonen (10) angeordnet sind.

7.  Schallquellen-Verfolgungsvorrichtung (1) nach Anspruch 5 oder 6, wobei die ersten lichtemittierenden Abschnitte (30) oder die ersten und die zweiten lichtemittierenden Abschnitte die emittierte Lichtmenge entsprechend dem Signal-Ausgangspegel verändern.

8.  Schallquellen-Verfolgungsvorrichtung (1) nach Anspruch 5 oder 6, wobei die ersten lichtemittierenden Abschnitte (30) oder die ersten und die zweiten lichtemittierenden Abschnitte die Farbe von emittiertem Licht entsprechend dem Signal-Ausgangspegel verändern.

9.  Schallquellen-Verfolgungsvorrichtung (1) nach einem der Ansprüche 3 bis 8, wobei der Berechnungsabschnitt an dem Trageelement (20) angebracht ist.

10. Schallquellen-Verfolgungsvorrichtung (1) nach einem der Ansprüche 1 bis 9, wobei ein Griffabschnitt (23) an dem Trageelement (20) angeordnet ist.

11. Schallquellen-Verfolgungsvorrichtung (1) nach Anspruch 10, wobei der Berechnungsabschnitt in den Griffabschnitt (23) integriert ist.

12. Schallquellen-Verfolgungsvorrichtung (1) nach einem der Ansprüche 1 bis 11, wobei die Vielzahl von Gradienten-Mikrofonen (10) so angeordnet sind, dass benachbarte Gradienten-Mikrofone (10) gleich weit beabstandet sind.

13. Schallquellen-Verfolgungsvorrichtung nach Anspruch 1, wobei die Gradienten-Mikrofone (10) in einer Gruppe so angeordnet sind, dass die Schallöffnungen (141, 142) im Wesentlichen in ein- und dieselbe Richtung zeigen.

14. Schallquellen-Verfolgungsvorrichtung nach einem der Ansprüche 1 bis 13, wobei die Schallöffnung (141, 142) eine Schalleintrittsöffnung ist.

**Revendications**

1.  Dispositif de suivi de source sonore (1) comprenant :

    une pluralité de microphones (10) ;
    un élément de support (20) pour supporter les microphones de la pluralité de microphones (10) de telle sorte que la pluralité de microphones (10) sont disposés en réseau dans un plan donné,

    **caractérisé en ce que**
    les microphones de la pluralité de microphones (10) sont une pluralité de microphones différentiels bidirectionnels (10), dans lequel les microphones de la pluralité de microphones différentiels (10) sont configurés avec deux ports de son (141, 142) de telle sorte que la pression acoustique est appliquée aux deux faces d'un diaphragme (121), dans lequel les deux ports de son (141, 142) sont pourvus sur le même plan et dans lequel les deux ports de son (141, 142) sont alignés comme axe principal de directionalité (AX) ; et
    les microphones de la pluralité de microphones différentiels (10) sont supportés par l'élément de support (20) de telle sorte que l'axe principal (AX) de directionalité de chacun des microphones est essentiellement orthogonal au plan donné, et le plan sur lequel les deux ports de son (141, 142) de chacun des microphones sont pourvus est essentiellement orthogonal au plan donné.

2.  Dispositif de suivi de source sonore (1) selon la revendication 1, dans lequel l'élément de support (20) est composé d'une pluralité de portions en forme de bâton (22) agencées en réseau selon un motif régulier, et comporte une pluralité d'ouvertures (21) qui y sont formées.

3.  Dispositif de suivi de source sonore (1) selon la revendication 1 ou 2, comprenant en outre :

    une portion de calcul pour mettre en oeuvre un processus de calcul sur une sortie de signal depuis chaque microphone de la pluralité de microphones différentiels (10) ; et
    une portion d'affichage qui est adaptée pour produire, sur base de résultats de calcul dans la portion de calcul, un affichage du niveau de sortie de signaux sortis par chaque microphone de la pluralité de microphones différentiels (10).

4.  Dispositif de suivi de source sonore (1) selon la revendication 3, dans lequel la portion d'affichage est adaptée pour produire un affichage d'un niveau de sortie de signal estimé obtenu sur base des résultats de calcul dans la portion de calcul, pour au moins une position entre des microphones différentiels voisins (10).

5.  Dispositif de suivi de source sonore (1) selon la revendication 3, dans lequel
    la portion d'affichage comprend une pluralité de premières portions d'émission lumineuse (30) ; et
    les portions de la pluralité de premières portions d'émission lumineuse (30) sont attachées à l'élément de support (20) de telle sorte que les premières portions d'émission lumineuse (30) sont respectivement disposées à proximité de la pluralité de microphones différentiels (10).

6.  Dispositif de suivi de source sonore (1) selon la revendication 4 ou 5, dans lequel
    la portion d'affichage comprend une pluralité de deuxièmes portions d'émission lumineuse ; et
    les portions de la pluralité de deuxièmes portions d'émission lumineuse sont attachées à l'élément de support de telle sorte que les deuxièmes portions d'émission lumineuse (30) sont disposées à proximité d'au moins une position entre les microphones différentiels (10).

7.  Dispositif de suivi de source sonore (1) selon la revendication 5 ou 6, dans lequel les premières portions d'émission lumineuse (30), ou les première et deuxième portions d'émission lumineuse, font varier la quantité de lumière émise en fonction du niveau de sortie de signal.

8.  Dispositif de suivi de source sonore (1) selon la revendication 5 ou 6, dans lequel les premières portions d'émission lumineuse (30), ou les première et deuxième portions d'émission lumineuse, font varier la couleur de la lumière émise en fonction du niveau de sortie de signal.

9.  Dispositif de suivi de source sonore (1) selon l'une quelconque des revendications 3 à 8, dans lequel la portion de calcul est attachée à l'élément de support (20).

10. Dispositif de suivi de source sonore (1) selon l'une quelconque des revendications 1 à 9, dans lequel une portion de saisie (23) est disposée sur l'élément de support (20).

11. Dispositif de suivi de source sonore (1) selon la revendication 10, dans lequel la portion de calcul est incorporée dans la portion de saisie (23).

12. Dispositif de suivi de source sonore (1) selon l'une quelconque des revendications 1 à 11, dans lequel les microphones de la pluralité de microphones différentiels (10) sont agencés de telle sorte que des microphones différentiels voisins (10) sont espacés de manière équidistante.

13. Dispositif de suivi de source sonore selon la revendication 1, dans lequel les microphones différentiels (10) sont disposés en réseau avec les ports de son (141, 142) pointant essentiellement dans une même direction.

14. Dispositif de suivi de source sonore selon l'une quelconque des revendications 1 à 13, dans lequel le port de son (141, 142) est un port d'entrée de son.

Fig. 1

Fig. 2

F i g . 3

F i g . 4

F i g . 5

F i g . 6

Fig. 7

40

MICROPHONE ARRAY

16 CH SIGNAL

41

PROCESSOR

DETECTION CIRCUIT

AMPLIFIER

411

412

16 CH SIGNAL

16 CH SIGNAL

LIGHT EMITTING PORTION DRIVING PORTION

16 CH SIGNAL

DIGITIZER

43

42

Fig. 8

LED OUTPUT

GREEN

RED

DIFFERENTIAL MICROPHONE OUTPUT LEVEL

F i g . 9

SOUND SOURCE

141

10

142

30

OUTPUT LEVEL

ORDINARY MICROPHONE

LOCATION IN ARRAY DIRECTION

F i g . 1 0

141   10                        22

142

Fig. 11

Fig. 12A

Fig. 12B

Fig. 13

**REFERENCES CITED IN THE DESCRIPTION**

**Patent documents cited in the description**

- JP 2007006253 A
- WO 2005045371 A1
- US 3348195 A
- JP 1113623 A
- EP 1513345 A1